(19) Europäisches Patentamt
European Patent Office
Office européen des brevets

(11) **EP 2 810 132 B1**

(12) **EUROPÄISCHE PATENTSCHRIFT**

(45) Veröffentlichungstag und Bekanntmachung des Hinweises auf die Patenterteilung:
**15.08.2018 Patentblatt 2018/33**

(21) Anmeldenummer: **13700880.1**

(22) Anmeldetag: **16.01.2013**

(51) Int Cl.:
*G05B 19/042* *(2006.01)*     *G05B 19/414* *(2006.01)*
*B60L 3/00* *(2006.01)*

(86) Internationale Anmeldenummer:
**PCT/EP2013/050722**

(87) Internationale Veröffentlichungsnummer:
**WO 2013/113554 (08.08.2013 Gazette 2013/32)**

(54) **VORRICHTUNG ZUR REGELUNG EINES MOTORS**

APPARATUS FOR CONTROLLING A MOTOR

DISPOSITIF POUR LA RÉGULATION D'UN MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2012 DE 102012201241**

(43) Veröffentlichungstag der Anmeldung:
**10.12.2014 Patentblatt 2014/50**

(73) Patentinhaber: **Robert Bosch GmbH**
**70442 Stuttgart (DE)**

(72) Erfinder: **ERBAN, Andreas**
**74369 Loechgau (DE)**

(56) Entgegenhaltungen:
**EP-A2- 2 223 821     DE-A1- 4 423 464**
**DE-A1- 10 065 237     DE-A1- 10 145 517**
**US-A- 5 248 922**

**Beschreibung**

Die Erfindung betrifft eine Vorrichtung zum Regeln eines Motors, insbesondere eines Fahrzeugmotors.

Aus dem Stand der Technik sind kombinierte Motorregelungen bekannt, die sowohl einen Momenten- als auch einen Drehzahlregler umfassen. Derartige Regelungen werden z. B. als Antriebsschlupfregelung für Fahrzeugantriebe eingesetzt. Bei solchen kombinierten Regelungen wird die Stellgröße in Abhängigkeit der vom Momentenregler als auch in Abhängigkeit der vom Drehzahlregler ausgegebenen Signalgröße erzeugt. Die beiden Regler sind üblicherweise in demjenigen Steuergerät integriert, das für die Fahrdynamikregelung verantwortlich ist (z. B im ESP-Steuergerät). Dieses Steuergerät ist in der Regel über einen Datenbus, z. B: den CAN-Bus, und gegebenenfalls über ein oder mehrere zwischengeschaltete Steuergeräte mit einem Inverter verbunden, der auf Basis der von den Reglern erzeugten Signalgrößen eine entsprechende Stellgröße - im Falle eines Elektromotors z. B. einen Strom - erzeugt. Da der Informationsaustausch zwischen dem ESP-Steuergerät und der jeweiligen Motor-Stelleinheit unter Umständen recht lange dauern kann, kommt es zu langen Signallaufzeiten bzw. Totzeiten, die insbesondere bei der Regelung von Elektromotoren zu störenden Regelschwingungen führen können.

Aus der Offenlegungsschrift US 5,248,922 A ist außerdem ein Steuergerät bekannt, das an eine Vielzahl unterschiedlicher Motoren anpassbar ist, wobei in Abhängigkeit einer Leistungsanforderung und einer Identifikationsinformation eine Steuereinrichtung unterschiedliche Anforderungssignale an unterschiedliche Motoren sendet.

Aus der EP 2 223 821 A2 ist eine Vorrichtung zum Optimieren eines Drehmoments von einem Haupt- und einem Assistenzantriebssystems eines Elektrofahrzeugs bekannt. Aus der DE 101 45 517 A1 geht außerdem ein Antriebssystem hervor, dass modularisiert aufgebaut ist. Ferner ist aus der DE 100 65 237 A1 eine Vorrichtung zur Ansteuerung und Regelung eines Elektromotors bekannt, wobei zum Ansteuern des Elektromotors ein Umrichter vorgesehen ist.

Es ist daher Aufgabe der vorliegenden Erfindung, eine Vorrichtung zur Regelung eines Motors, insbesondere eine Elektromotors, zu schaffen, die kürzere Reaktionszeiten aufweist als bekannte Motorregelungen und bei der weniger Regelschwingungen auftreten.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Gemäß der Erfindung wird eine Vorrichtung zum Regeln eines Motors, wie z. B. eines Elektro- oder Verbrennungsmotors, vorgeschlagen, die einen ersten Regelkreis mit einem ersten Regler und einen zweiten Regelkreis mit einem zweiten Regler umfasst, wobei die Regler dazu ausgebildet sind, jeweils eine Zustandsgröße des Motors, wie z. B. das Motormoment oder die Motordrehzahl, zu regeln. Der zweite Regler ist dabei erfindungsgemäß so angeordnet, dass er signaltechnisch näher am Motor liegt als der erste Regler. D. h., die Signallaufzeiten vom zweiten Regler zum Motor sind kürzer als vom ersten Regler zum Motor. Dadurch kann zumindest der zweite Regler schneller auf dynamische Zustandsänderungen des Motors reagieren, so dass insgesamt deutlich weniger Regelschwingungen auftreten.

Die erfindungsgemäße Regelvorrichtung umfasst vorzugsweise eine Einheit, die in Abhängigkeit von einer vom ersten Regler ausgegebenen ersten Signalgröße und einer vom zweiten Regler ausgegebenen zweiten Signalgröße eine resultierende Signalgröße bildet. Die Einheit kann z. B. einen Summenbildner umfassen. Die vom ersten und zweiten Regler ausgegebenen Signalgrößen - oder gegebenenfalls auch daraus abgeleitete Größen - werden in diesem Fall summiert.

Der erste und zweite Regler sind vorzugsweise derart angeordnet, dass die Signallaufzeit der zweiten Signalgröße zu der Einheit kürzer ist als die Signallaufzeit der ersten Signalgröße zu der Einheit. Der zweite Regler befindet sich damit signaltechnisch "näher" am Motor als der erste Regler, so dass er kürzere Reaktionszeiten aufweist.

Gemäß einer bevorzugten Ausführungsform der Erfindung ist der zweite Regler mit der die resultierende Signalgröße bildenden Einheit direkt verbunden. D. h. zwischen dem zweiten Regler und der Einheit befindet sich insbesondere keine weitere signalverarbeitende Einheit, wie z. B. ein Datenbus oder eine weitere Steuereinrichtung, sondern vorzugsweise nur eine einfache Datenleitung. Dadurch sind die Signallaufzeiten im Regelkreis des zweiten Reglers deutlich kürzer als im Regelkreis des ersten Reglers.

Hingegen ist der erste Regler mit der genannten Einheit vorzugsweise über wenigstens eine signalverarbeitende Einheit, wie z. B. einen Datenbus und/oder wenigstens ein zwischengeschaltetes Steuergerät, verbunden.

Die erfindungsgemäße Regelvorrichtung umfasst vorzugsweise einen Inverter, der aus der resultierenden Signalgröße eine Stellgröße erzeugt, mit der der Motor schließlich angesteuert wird.

Der erste Regler ist erfindungsgemäß ein Momentenregler und der zweite Regler ein Drehzahlregler.

Erfindungsgemäß ist der erste Regler in einem ersten Steuergerät, und der zweite Regler in einem zweiten Steuergerät integriert. Ein Steuergerät ist dabei als eine bauliche elektronische Einheit mit einem Gehäuse und mehreren Ein- und Ausgängen zu verstehen.

Die vorstehend genannte Einheit zum Bilden der resultierenden Signalgröße ist vorzugsweise ebenfalls im zweiten Steuergerät integriert.

Darüber hinaus ist erfindungsgemäß auch der Inverter im zweiten Steuergerät integriert.

Das zweite Steuergerät ist dem ersten Steuergerät erfindungsgemäß nachgeschaltet. Zwischen dem ersten und zweiten Steuergerät kann z. B: wenigstens ein weiteres Steuergerät und/oder ein Datenbus zwischengeschaltet sein. Ein vom ersten Steuergerät ausgegebenes Signal wird in diesem Fall über wenigstens ein weiteres Steuergerät bzw. den Datenbus an das zweite Steuergerät übermittelt. Die Signallaufzeiten im Regelkreis des ersten Reglers sind daher länger als die Signallaufzeiten im Regelkreis des zweiten Reglers.

Gemäß einer speziellen Ausführungsform der Erfindung umfasst die Regelvorrichtung auch eine Steuereinheit, die in Abhängigkeit eines Fahrzustands festlegt, in welchem Regelmodus die Regelung des Motors erfolgt. Als mögliche Regelmodi können z. B. eine reine Momentenregelung, eine reine Drehzahlregelung und/oder eine kombinierte Regelung, an der mehrere Regler beteiligt sind, vorgegeben werden. Im Falle einer einfachen Regelung kann ein Regler, wie z. B. der Drehzahlregler, von der Steuereinheit deaktiviert werden. Im Falle einer kombinierten Regelung werden vorzugsweise die Signalgrößen aller beteiligten Regler bei der Bildung der resultierenden Signalgröße berücksichtigt.

Die Reglerverstärkung des zweiten Reglers kann auch in Abhängigkeit vom Fahrzustand, wie z. B. abhängig von der Fahrzeuggeschwindigkeit oder dem Motordrehmoment, variiert werden. Auf diese Weise kann für unterschiedliche Fahrsituationen ein optimaler Regelmodus eingestellt werden.

Bei niedrigem Radschlupf - das Fahrzeug befindet sich also in einem stabilen Zustand - erfolgt vorzugweise eine reine Momentenregelung. Der Drehzahlregler ist in diesem Fall inaktiv, oder dessen Ausgangssignal wird bei der Bildung der resultierenden Signalgröße nicht berücksichtigt. Wenn der Radschlupf an wenigstens einem Rad einen vorgegebenen Schwellenwert überschreitet, wird vorzugsweise eine kombinierte Regelung durchgeführt. Die Regelung kann somit in kritischen Fahrsituationen entsprechend schnell reagieren. Die einzelnen, von den Reglern ausgegebenen Signalgrößen können abhängig vom Fahrzustand, wie z. B. vom aktuellen Radschlupf, unterschiedlich gewichtet oder berücksichtigt werden.

Die genannte Steuereinheit zur Einstellung des Regelmodus, oder zumindest ein Teil davon, ist vorzugsweise im zweiten Steuergerät integriert.

Der erste Regler ist erfindungsgemäß in einem Steuergerät integriert, das für die Fahrdynamikregelung zuständig ist, wie z. B. in einem ESP-Steuergerät. Der zweite Regler ist vorzugsweise in einem anderen Steuergerät integriert, das signaltechnisch näher am Motor liegt.

Erfindungsgemäß umfasst die Regelvorrichtung eine Einrichtung zur Berechnung der Soll-Drehzahl des Motors. Diese Einrichtung ist erfindungsgemäß in demjenigen Steuergerät untergebracht, in dem auch der erste Regler enthalten ist.

Die berechnete Soll-Drehzahl wird vorzugsweise über einen Datenbus an das zweite Steuergerät übertragen und es wird dort eine Regeldifferenz gebildet.

Die Erfindung wird nachstehend anhand der beigefügten Zeichnungen beispielhaft näher erläutert. Es zeigen:

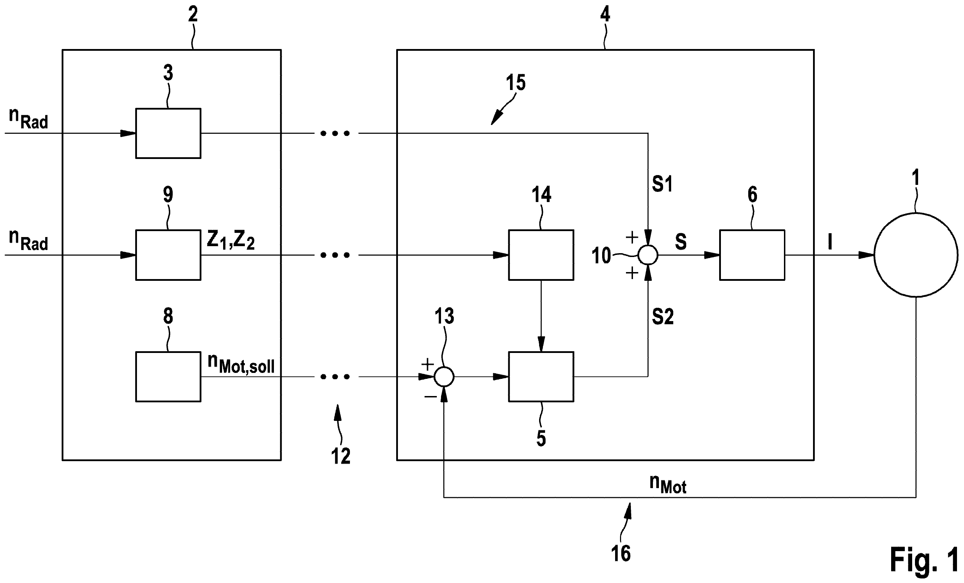

Fig. 1 ein Blockschaltbild einer Regelvorrichtung gemäß einer Ausführungsform der Erfindung.

Figur 1 zeigt ein Blockschaltbild einer Ausführungsform einer erfindungsgemäßen Vorrichtung zur Regelung eines Motors 1, hier eines Elektromotors, der z. B. die Vorderachse eines Fahrzeugs antreibt.

Die Regelvorrichtung umfasst im vorliegenden Beispiel zwei Regler 3,5, nämliche einen Drehmomentenregler 3 und Drehzahlregler 5, die den Elektromotor 1 in Abhängigkeit vom Fahrzustand entweder einzeln oder gemeinsam regeln. Bei niedrigem Radschlupf - das Fahrzeug befindet sich in einem stabilen Zustand - wird vorzugweise eine reine Momentenregelung durchgeführt. Der Drehzahlregler 5 bleibt in diesem Fall inaktiv. Wenn der Radschlupf an wenigstens einem Rad dagegen einen vorgegebenen Schwellenwert überschreitet, wird vorzugsweise eine kombinierte Regelung durchgeführt, bei der die Stellgröße I - im vorliegenden Fall der Motor-Betriebsstrom - unter Berücksichtigung beider Regler-Ausgangsgrößen (Signalgrößen $S_1$ und $S_2$) gebildet wird. Der jeweilige Regelmodus wird von einer Steuereinheit 14 kontrolliert, die mit dem zweiten Regler 5 verbunden ist und letzteren wahlweise aktivieren oder deaktivieren, oder dessen Reglerverstärkung verändern kann.

Der Momentenregler 3 ist Teil eines ersten Regelkreises 15 und der Drehzahlregler Teil eines zweiten Regelkreises 16.

Die Regelvorrichtung umfasst im dargestellten Beispiel zwei Steuergeräte 2 und 4, die über einen Datenbus 12 verbunden und somit signaltechnisch in Serie geschaltet sind. Der Momentenregler 3 ist im ersten Steuergerät 2, und der Drehzahlregler 5 im zweiten Steuergerät 4 als Software integriert.

Das erste Steuergerät 2 ist vorzugsweise dasjenige Steuergerät, das für die Fahrdynamikregelung des Fahrzeugs zuständig ist, wie z. B. das ESP-Steuergerät.

Beide Regler 3,5 geben, sofern sie aktiv sind, an ihrem Ausgang eine Signalgröße $S_1$ und $S_2$ aus, die einer Einheit 10 zugeführt wird, welche aus den Signalgrößen $S_1$ und $S_2$ eine resultierende Signalgröße S bildet. Die Reglerausgänge sind also jeweils mit der Einheit 10 verbunden.

Im vorliegenden Beispiel ist die Einheit 10 ein Summenbildner, der die beiden Signalgrößen $S_1$ und $S_2$ summiert. Das resultierende Signal S wird schließlich einem Inverter 6 zugeführt, der es in einen entsprechenden Stromwert I wandelt.

Die Einheit 10 und der Inverter 6 sind hier, ebenso wie der zweite Regler 5, im Steuergerät 4 integriert. Die Steuereinheit 14 befindet sich ebenfalls im Steuergerät 4. Der Ausgang des Inverters 6 ist mit dem Elektromotor 1 verbunden.

Der Momentenregler 3 ermittelt die erste Signalgröße $S_1$ abhängig von einem zuvor ermittelten Soll-Motormoment $M_{Soll}$ und einem Ist-Motormoment. Die einzelnen Momente werden in bekannter Weise unter Berücksichtigung der Raddrehzahlen $n_{Rad}$ berechnet. Die Raddrehzahlen $n_{Rad}$ werden mittels Drehzahlsensoren (nicht gezeigt) gemessen.

Der Drehzahlregler 5 ermittelt die zweite Signalgröße $S_2$ abhängig von einer zuvor ermittelten Soll-Drehzahl $n_{Mot,\,soll}$ und einer gemessenen IstDrehzahl $n_{Mot}$. Die Soll-Drehzahl $n_{Mot,\,soll}$ des Motors wird mittels einer Einrichtung 8 berechnet, die im ersten Steuergerät 2 enthalten ist. Sie wird schließlich an das zweite Steuergerät 4 über den Datenbus 12 übertragen.

Die Soll-Drehzahl $n_{Mot,\,soll}$ kann z. B. gemäß

$$n_{Mot,\,soll} = \frac{30}{\pi} \frac{i_D\, i_G}{r_{Rad}}\, v_{Rad,\,soll}$$

berechnet werden, wobei

> $i_D$ die Übersetzung eines Differentialgetriebes des Fahrzeugs,
> $i_G$ die Übersetzung des mit dem Elektromotor 1 gekoppelten Fahrzeuggetriebes,
> $r_{Rad}$ den Radius der angetriebenen Räder und
> $v_{Rad,\,soll}$ eine mittlere Sollgeschwindigkeit der angetriebenen Räder bezeichnet.

Zur Bildung der Regeldifferenz für die Drehzahlregelung ist eine Einheit 13 vorgesehen, die hier im zweiten Steuergerät 4 integriert ist. Die Regeldifferenz wird anschließend an den Drehzahlregler 5 ausgegeben. Der Drehzahlregler 5 kann z. B. ein PDT1-Regler sein. Die Reglerverstärkungen für den P- und D-Anteil können z. B. in Abhängigkeit der Fahrzeuggeschwindigkeit und/oder des mittleren Motormoments gewählt werden.

Zur Bestimmung des Regelungsmodus ist, wie vorstehend erwähnt, eine Steuereinheit 14 vorgesehen, die den Regelungsmodus in Abhängigkeit vom Fahrzustand einstellt. Der Fahrzustand wird hier von einer Einheit 9 überwacht, die eine den Fahrzustand beschreibende Größe, z. B. $Z_1$ oder $Z_2$, über den Datenbus 12 an die Steuereinheit 14 ausgibt. Die Einheit 9 ermittelt z. B. den aktuellen Radschlupf der angetrieben Räder und erzeugt ein Signal Z1, wenn der Radschlupf kleiner ist als ein vorgegebener Schwellenwert - das Fahrzeug sich also in einem stabilen Fahrzustand befindet -, und ein Signal Z2, wenn der Radschlupf größer ist als ein vorgegebener Schwellenwert - das Fahrzeug sich also in einem instabilen Fahrzustand befindet.

Im stabilen Fahrzustand wird vorzugsweise eine reine Momentenregelung durchgeführt. Im instabilen Fahrzustand wird dagegen eine kombinierte Regelung unter Beteiligung beider Regler 3,5 durchgeführt. Dadurch, dass die Reaktionszeiten im Drehzahlregelkreis 16 wesentlich geringer sind als im Momentenregelkreis 15, wird insgesamt eine schnellerer Abbau der Regelabweichung erreicht und es kommt außerdem zu weniger Regelschwingungen im Regelkreis,

**Patentansprüche**

1. Vorrichtung zum Regeln eines Motors (1), mit einem ersten Regelkreis (15), der einen ersten Regler (3) umfasst, und einem zweiten Regelkreis (16), der einen zweiten Regler (5) umfasst, wobei die Regler (3,5) dazu ausgebildet sind, jeweils eine Zustandsgröße des Motors (1) zu regeln, wobei der zweite Regler (5) signaltechnisch näher am Motor (1) angeordnet ist als der erste Regler (5), **dadurch gekennzeichnet, dass** der erste Regler (3) in einem ersten Steuergerät (2), das für eine Fahrdynamikregelung eines Fahrzeuges zuständig ist und eine Einrichtung zur Berechnung einer Soll-Drehzahl des Motors (1) aufweist, und der zweite Regler (5) in einem zweiten Steuergerät (4), in das ein Inverter integriert ist, integriert ist, wobei das zweite Steuergerät (4) dem ersten Steuergerät (2) nachgeschaltet ist, und wobei der erste Regler (3) ein Momentenregler und der zweite Regler (5) ein Drehzahlregler ist.

2. Vorrichtung nach Anspruch 1, **dadurch gekennzeichnet, dass** der erste und zweite Regler (3,5) eine erste bzw. zweite Signalgröße (S1, S2) ausgeben, und dass eine Einheit (10) vorgesehen ist, die in Abhängigkeit der ersten und zweiten Signalgröße (S1, S2) eine resultierende Signalgröße (S) bildet.

3. Vorrichtung nach Anspruch 2, **dadurch gekennzeichnet, dass** der erste (3) und zweite Regler (5) derart angeordnet sind, dass die Signallaufzeit der zweiten Signalgröße (S2) zu der Einheit (10) kürzer ist als die Signallaufzeit der ersten Signalgröße (S1) zu der Einheit (10).

4. Vorrichtung nach Anspruch 2 oder 3, **dadurch gekennzeichnet, dass** der zweite Regler (5) mit der Einheit (10) direkt verbunden ist.

5. Vorrichtung nach einem der Ansprüche 2 bis 4, **dadurch gekennzeichnet, dass** der erste Regler (3) mit der Einheit (10) über wenigstens eine signalverarbeitende Einheit (12) verbunden ist.

6. Vorrichtung nach einem der Ansprüche 2 bis 5, **dadurch gekennzeichnet, dass** der erste Regler (3) mit der Einheit (10) über wenigstens einen Datenbus (12) und/oder wenigstens ein zwischengeschaltetes Steuergerät 5 verbunden ist.

7. Vorrichtung nach einem vorstehenden Ansprüche, **dadurch gekennzeichnet, dass** der Inverter (6) vorgesehen ist, der eine von der resultierenden Signalgröße (S) abhängige Stellgröße (I) erzeugt, mit der der Motor (1) angesteuert wird.

**8.** Vorrichtung nach Anspruch 1, **dadurch gekennzeichnet, dass** zwischen dem ersten und zweiten Steuergerät (2, 4) wenigstens ein weiteres Steuergerät und/oder ein Datenbus zwischengeschaltet ist.

**9.** Vorrichtung nach einem der vorstehenden Ansprüche, **dadurch gekennzeichnet, dass** eine Steuereinheit (14) vorgesehen ist, die in Abhängigkeit eines Fahrzustands festlegt, in welchem Regelmodus (Z1, Z2) die Regelung des Motors (1) erfolgt.

**10.** Vorrichtung nach Anspruch 9, **dadurch gekennzeichnet, dass** die Steuereinheit (14) im zweiten Steuergerät (4) angeordnet ist.

**Claims**

**1.** Apparatus for controlling a motor (1), having a first control loop (15), which comprises a first controller (3), and a second control loop (16), which comprises a second controller (5), wherein the controllers (3, 5) are designed to each control a state variable of the motor (1), wherein the second controller (5) is arranged closer to the motor (1) in terms of signalling than the first controller (5), **characterized in that** the first controller (3) is integrated in a first control device (2), which is responsible for controlling the driving dynamics of a vehicle and has a device for calculating a desired speed of the motor (1), and the second controller (5) is integrated in a second control device (4), in which an inverter is integrated, wherein the second control device (4) is connected downstream of the first control device (2), and wherein the first controller (3) is a torque controller and the second controller (5) is a speed controller.

**2.** Apparatus according to Claim 1, **characterized in that** the first and second controllers (3, 5) output a first and a second signal variable (S1, S2), respectively, and **in that** a unit (10) is provided and forms a resulting signal variable (S) on the basis of the first and second signal variables (S1, S2).

**3.** Apparatus according to Claim 2, **characterized in that** the first controller (3) and the second controller (5) are arranged in such a manner that the signal propagation time of the second signal variable (S2) to the unit (10) is shorter than the signal propagation time of the first signal variable (S1) to the unit (10).

**4.** Apparatus according to Claim 2 or 3, **characterized in that** the second controller (5) is directly connected to the unit (10).

**5.** Apparatus according to one of Claims 2 to 4, **characterized in that** the first controller (3) is connected to the unit (10) via at least one signalprocessing unit (12).

**6.** Apparatus according to one of Claims 2 to 5, **characterized in that** the first controller (3) is connected to the unit (10) via at least one data bus (12) and/or at least one interposed control device.

**7.** Apparatus according to one of the preceding claims, **characterized in that** the inverter (6) is provided and generates a manipulated variable (I) which is dependent on the resulting signal variable (S) and is used to actuate the motor (1).

**8.** Apparatus according to Claim 1, **characterized in that** at least one further control device and/or a data bus is interposed between the first and second control devices (2, 4).

**9.** Apparatus according to one of the preceding claims, **characterized in that** a control unit (14) is provided and stipulates the control mode (Z1, Z2) in which the motor (1) is controlled on the basis of a driving state.

**10.** Apparatus according to Claim 9, **characterized in that** the control unit (14) is arranged in the second control device (4).

**Revendications**

**1.** Ensemble de régulation d'un moteur (1), présentant un premier circuit de régulation (15) qui comporte un premier régulateur (3) et un deuxième circuit de régulation (16) qui comporte un deuxième régulateur (5), les régulateurs (3, 5) étant configurés pour réguler chacun une grandeur d'état du moteur (1), le deuxième régulateur (5) étant disposé en termes de signalisation plus près du moteur (1) que le premier régulateur (5),
**caractérisé en ce que**
le premier régulateur (3) est intégré dans un premier appareil de commande (2) responsable de la régulation de la dynamique de roulage d'un véhicule et qui présente un dispositif de calcul de la vitesse de rotation de consigne du moteur (1) et le deuxième régulateur (5) est intégré dans un deuxième appareil de commande (4) dans lequel est intégré un inverseur,
**en ce que** le deuxième appareil de commande (4) est raccordé en aval du premier appareil de commande (2) et
**en ce que** le premier régulateur (3) est un régulateur de couple et le deuxième régulateur (5) un régulateur de vitesse de rotation.

**2.** Ensemble selon la revendication 1, **caractérisé en ce que** le premier et le deuxième régulateurs (3, 5) délivrent une première et une deuxième grandeur (S1, S2) de signalisation et **en ce qu'**une unité (10) forme une grandeur résultante de signalisation (S) en fonction de la première et de la deuxième grandeur de signalisation (S1, S2).

**3.** Ensemble selon la revendication 2, **caractérisé en ce que** le premier régulateur (3) et le deuxième régulateur (5) sont disposés de telle sorte que le temps de parcours de la deuxième grandeur de signalisation (S2) vers l'unité (10) est plus court que le temps de parcours de la première grandeur de signalisation (S1) à l'unité (10).

**4.** Ensemble selon les revendications 2 ou 3, **caractérisé en ce que** le deuxième régulateur (5) est relié directement à l'unité (10).

**5.** Ensemble selon l'une des revendications 2 à 4, **caractérisé en ce que** le premier régulateur (3) est relié à l'unité (10) par au moins une unité (12) de traitement des signaux.

**6.** Ensemble selon l'une des revendications 2 à 5, **caractérisé en ce que** le premier régulateur (3) est relié à l'unité (10) par au moins un bus de données (12) et/ou par au moins un appareil de commande intermédiaire.

**7.** Ensemble selon l'une des revendications précédentes, **caractérisé en ce que** l'inverseur (6) qui forme une grandeur de réglage (I) qui dépend de la grandeur résultante de signalisation (S) et par laquelle le moteur (1) est commandé est prévu.

**8.** Ensemble selon la revendication 1, **caractérisé en ce qu'**au moins un autre appareil de commande et/ou un bus de données est intercalé entre le premier et le deuxième appareil de commande (2, 4).

**9.** Ensemble selon l'une des revendications précédentes, **caractérisé en ce qu'**une unité de commande (14) est prévue et définit en fonction d'un état de conduite dans quel mode de régulation (Z1, Z2) la régulation du moteur (1) s'effectue.

**10.** Ensemble selon la revendication 9, **caractérisé en ce que** l'unité de commande (14) est disposée dans le deuxième appareil de commande (4).

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5248922 A
- EP 2223821 A2
- DE 10145517 A1
- DE 10065237 A1